# EUROPEAN PATENT APPLICATION

(11) **EP 4 636 894 A1**
(43) Date of publication of application: **22.10.2025**
(21) Application number: 24845962.0
(22) Date of filing: 19.07.2024
(51) Int. Cl.: H01M 10/058, H01M 50/531

(54) **ELECTRODE TAB-FREE CABLE-TYPE CELL HAVING HIGH FLEXIBILITY AND LOW RESISTANCE**

(30) Priority: 21.07.2023 KR 20230095050
(71) Applicant: LG Energy Solution, Ltd., Seoul 07335 (KR)
(72) Inventor: AHN, Byung Sun, Daejeon 34122 (KR); WON, Sang Yeon, Daejeon 34122 (KR); NOH, Suk In, Daejeon 34122 (KR)
(74) Representative: Hoffmann Eitle
(86) International application number: PCT/KR2024/010510
(87) International publication number: WO 2025/023660

(57) **Abstract**

When a cable-type cell in which electrode tabs are formed at both ends thereof is manufactured, the travel distance of electrons from electrodes to the electrode tabs increases as the length of the cell increases due to the linear structure of the cable-type cell, resulting in a problem of low electron transfer rate due to an increase in cell resistance. Disclosed is a highly flexible, low-resistance cable-type cell without electrode tabs configured such that an embedded member constituting the outermost side of the cable-type cell serves as an electrode tab without the need to form an electrode tab of an outer electrode by configuring the outermost side of the cable-typed cell such that the outer electrode is exposed from the embedded member in order to solve the above problem. The shortest path for electrons to pass from an active material layer of the electrode to the electrode tabs is provided, whereby high-flexibility and low-resistance properties are achieved.

## Description

### [Technical Field]

This application claims the benefit of priority to Korean Patent Application No. 2023-0095050 filed on July 21, 2023, the disclosure of which is incorporated herein by reference in its entirety.

The present invention relates to a highly flexible and low-resistance cable-type cell without electrode tabs. Specifically, due to the linear structure characteristics of a cable-type cell having electrode tabs formed at both ends thereof, the travel distance of electrons from electrodes to the electrode tabs increases as the length of the cell increases, resulting in a problem of a low electron transfer rate due to an increase in cell resistance. The present invention relates to a highly flexible and low-resistance cable-type cell without electrode tabs configured such that a function of an electrode tab is achieved by exposing the outer electrode from an embedded member constituting the outermost side of the cable-type cell without the need to form an electrode tab of an outer electrode in order to solve the above problem.

### [Background Art]

With rapid improvement in safety and capacity of a lithium secondary battery, which is capable of being charged and discharged, the types of devices that use the lithium secondary battery as an energy source have increased in number.

For example, the lithium secondary battery has been widely used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or as a medium or large battery pack configured to be used in an energy storage system (ESS).

Depending on the shape of a battery case, the lithium secondary battery is classified as a cylindrical battery cell having an electrode assembly mounted in a cylindrical metal can, a prismatic battery cell having an electrode assembly mounted in a prismatic metal can, or a pouch-type battery cell having an electrode assembly mounted in a pouch-type case made of an aluminum laminate sheet. Thereamong, the pouch-type battery cell has the advantages of relatively large capacity and easy structural modification.

Various wearable computer technologies and applications using these secondary batteries as a power source are being developed and published, and electronic devices such as mobile phones and laptop computers are being designed so as to have a predetermined curved surface for ergonomic design. Accordingly, secondary batteries for operating these electronic devices also need to be formed so as to have various shapes, such as a predetermined curved surface, depending on the shape of the electronic devices.

In order to match the capacity and voltage to meet the specifications of these types of devices, a plurality of pouch-type cells may be connected to each other in parallel or series to constitute a pack. However, there is a problem that the thickness and volume of each of the pouch-type cells increase accordingly, which reduces the flexibility of the cells and directly applies mechanical stress to cell components in case of mechanical deformation, resulting in performance degradation due to damage to the pouch-type cells.

In response thereto, the concept of a linear cell, which is a cell having a very large ratio of the length to the sectional diameter, has been proposed.

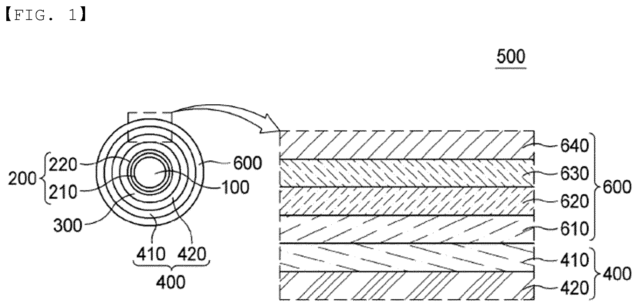

FIG. 1 is a sectional view of a conventional cable-type cell.

Referring to FIG. 1, the cable-type cell may include an inner electrode support 100 and an inner electrode 200 including a first inner current collector 210 and a first inner active material layer 220 sequentially wound around the inner electrode support 100.

An outer separation layer 300 may be formed outside the inner electrode 200.

An outer electrode 400 including an outer active material layer 420 and an outer current collector 410 may be formed outside the outer separation layer 300.

An embedded member 600 including a first embedded member layer 610, a second embedded member layer 620, a third embedded member layer 630, and a fourth embedded member layer 640 may be formed outside the outer electrode 400.

The first embedded member layer 610 may be an adhesive layer for adhesion between the outer current collector 410 and the embedded member 600.

The second embedded member layer 620 may be a metal layer for blocking moisture and/or oxygen.

The third embedded member layer 630 and/or the fourth embedded member layer 640 may be an insulating layer for insulation.

In the present invention, the embedded member is provided, wherein the embedded member is an insulator formed on an outer surface of the outer current collector to protect the electrode against moisture in the air and external impact. A conventional polymer resin including a moisture barrier layer may be used as the embedded member. In this case, aluminum or a liquid crystal polymer having excellent moisture barrier performance may be used as the moisture barrier layer.

The polymer resin may include any one selected from the group consisting of polyethylene terephthalate (PET), polyvinyl chloride (PVC), high density polyethylene (HDPE), and an epoxy resin or two or more thereof.

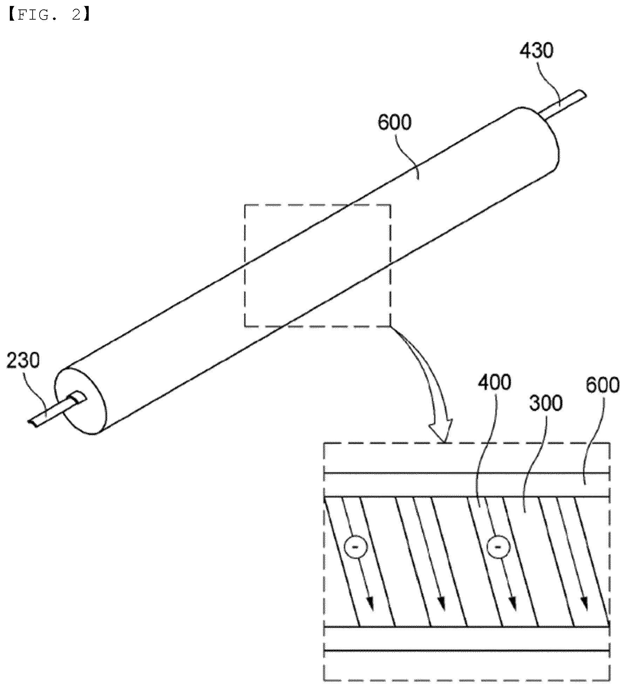

FIG. 2 is a perspective view of bidirectional electrode tabs of the conventional cable-type cell.

Referring to FIG. 2, electrode tabs may be formed at both ends of the conventional cable-type cell so as to be connected to external terminals.

The electrode tab protruding from the lower end of FIG. 2 may be an inner electrode tab 230 of the inner electrode.

The electrode tab protruding from the upper end of FIG. 2 may be an outer electrode tab 430 of the outer electrode.

The inner electrode tab 230 may extend from the inner current collector. The outer electrode tab 430 may extend from the outer current collector. Thus, a unidirectional cable-type cell may be formed in which the inner electrode tab and the outer electrode tab protrude from one end of the cable-type cell.

A bidirectional cable-type cell may be formed in which the inner electrode tab 230 and/or the outer electrode tab 430 are formed at both ends of the cable-type cell.

The embedded member may be added so as to wrap around the entirety of the inner electrode, an outer separation layer, and the outer electrode sequentially wound around the inner electrode support.

Thus, the electrode tabs of the inner electrode 200 and the outer electrode 400 are formed in the form of strips, which are respectively welded to the current collectors of the inner electrode 200 and the outer electrode 400 so as to protrude from both ends of the cable-type cell.

Due to the linear structure characteristics of the cable-type cell, electrode tabs of the electrodes can only be formed at both ends of the cell, and as the travel distance of electrons from the electrodes to the electrode tabs increases as the length of the cell increases, there is a problem that the rate characteristics related to electron mobility are degraded due to an increase in cell resistance.

Furthermore, in the case of a unidirectional cable-type cell, since the inner electrode tab and the outer electrode tab are formed adjacent to each other, there is a problem of short circuit due to contact between the two electrode tabs.

Therefore, a shortest distance path for electrons to pass from the active material layer of the electrode to the electrode tab is provided using a tabless structure in which an electrically conductive material serving as a positive electrode tab is applied to the outermost package of the cable-type cell, and the resistance of the cable-type cell is minimized regardless of the length of the linear cell, thereby balancing the length of the cell and the deterioration of the electron transfer characteristics.

Korean Registered Patent Publication No. 2259381 discloses a flexible secondary battery including an electrode support, a sheet type inner electrode spirally wound outside the electrode support, a sheet type first solid electrolyte layer spirally wound outside the inner electrode, a sheet type bipolar electrode spirally wound outside the first solid electrolyte layer, a sheet type second solid electrolyte layer spirally wound outside the bipolar electrode, and a sheet type outer electrode spirally wound outside the second solid electrolyte layer, wherein each of the first solid electrolyte layer and the second solid electrolyte layer includes an organic solid electrolyte, the inner electrode and the outer electrode have insulating coatings provided at both ends of side surfaces facing the first solid electrolyte layer and the second solid electrolyte layer in a longitudinal direction, and the bipolar electrode has insulating coatings provided at both ends of both side surfaces in the longitudinal direction.

However, cable-type cell technology in which an embedded member exposes the outer electrode in order to use the outermost side of a cable-type cell of the present invention as an electrode tab of an outer electrode has not yet been applied.

Korean Registered Patent Publication No. 2128094 discloses a cable-type secondary battery including a cable-type electrode assembly including an inner electrode, a separation layer formed so as to surround an outer surface of the inner electrode, the separation layer being configured to prevent short circuit of the electrode, and an outer electrode formed so as to surround the separation layer, and a sheet type package spirally wound so as to surround an outer surface of the cable-type electrode assembly.

However, technology for a cable-type cell having an embedded member exposing an outer electrode of the present invention is not disclosed.

Japanese Patent Application Publication No. 2016-066520 discloses a power storage apparatus having a structure in which a power storage sheet including a positive electrode/separator/negative electrode is spirally wound around a wire structure, in which a gap is formed between the wound parts of the power storage sheet, and in which an exposed part is formed on a positive and/or negative electrode sheet of the power storage sheet and is exposed to the outside of the power storage sheet so as to be used as a terminal.

However, there is no disclosure of technology for a cable-type cell having an embedded member exposing an outer electrode of the present invention.

Japanese Patent Application Publication No. 2021-026957 discloses a negative electrode having a fiber bundle of carbon fibers and a metal wire inserted into the fiber bundle in a longitudinal direction of the fiber bundle and a pin-type secondary battery including the same.

However, technology for a cable-type cell having an embedded member wound while being partially spaced apart from each other in order to apply the outermost side of the cable-type cell of the present invention as an electrode tab of an outer electrode has not yet been applied.

Therefore, when a cable-type cell in which electrode tabs are formed at both ends thereof is manufactured, the travel distance of electrons from electrodes to the electrode tabs increases as the length of the cell increases due to the linear structure characteristics of the cable-type cell, resulting in a problem of low electron transfer rate due to an increase in cell resistance, and therefore it is necessary to develop a highly flexible and low-resistance cable-type cell without electrode tabs configured such that an embedded member constituting the outermost side of the cable-type cell serves as an electrode tab without the need to form an electrode tab of an outer electrode by removing a non-conductive material from the embedded member and forming a conductive layer at the outermost side of the cable-type cell in order to solve the above problem.

### [Disclosure]

### [Technical Problem]

The present invention has been made in view of the above problems. When a cable-type cell in which electrode tabs are formed at both ends thereof is manufactured, the travel distance of electrons from electrodes to the electrode tabs increases as the length of the cell increases due to the linear structure characteristics of the cable-type cell, resulting in a problem of low electron transfer rate due to an increase in cell resistance, and therefore it is an object of the present invention to provide a highly flexible and low-resistance cable-type cell without electrode tabs configured such that an embedded member constituting the outermost side of the cable-type cell serves as an electrode tab without the need to form an electrode tab of an outer electrode by removing a non-conductive material from the embedded member and forming a conductive layer at the outermost side of the cable-type cell in order to solve the above problem.

In addition, it is another object of the present invention to form a cable-type type tabless structure in which a pouch-type embedded member, which is the outermost package of a cable-type cell, is added to partially expose an outer electrode and the exposed outer electrode serves as an electrode tab, thereby providing a shortest distance path for electrons to move from an active material layer of the electrode to the electrode tab.

In addition, it is a further object of the present invention to provide a cable-type cell including a cable-type type tabless structure in which the length of the cell can be increased without restriction in order to solve the problem that the electron movement characteristics of a conventional cable-type cell deteriorate as the length of the cable-type cell increases.

### [Technical Solution]

A highly flexible and low-resistance cable-type cell without electrode tabs according to the present invention to accomplish the above objects includes a cable-type electrode assembly that includes an inner electrode support, and in sequence, one or more inner electrodes, an outer separation layer, and an outer electrode spirally wound around the inner electrode support; and a laminated embedded member spirally wound around the cable-type electrode assembly, wherein the laminated embedded member is wound so as to expose the outer electrode.

The laminated embedded member may partially expose the outer electrode.

The laminated embedded member may regularly or irregularly expose the outer electrode.

An exposed part of the outer electrode may be configured to be an electrode tab.

The laminated embedded member may have a strip structure extending in one direction and may be wound such that the outer electrode is partially exposed.

The one or more inner electrodes may include a first inner electrode, wherein the first inner electrode includes a first inner current collector and a first inner active material layer formed on one surface of the first inner current collector, and the first inner electrode, the outer separation layer, and the outer electrode may constitute a monocell.

The outer electrode may include an outer current collector and an outer active material layer formed on an inner surface of the outer current collector, and the first inner electrode, the outer separation layer, and the outer electrode may constitute a monocell.

The one or more inner electrodes may include an inner separation layer spirally wound outside the first inner electrode and a second inner electrode spirally wound outside the inner separation layer, and the first inner electrode, the inner separation layer, the second inner electrode, the outer separation layer, and the outer electrode may constitute a bi-cell.

The second inner electrode may include a second inner current collector and a 2-1 inner active material layer and a 2-2 inner active material layer formed respectively on opposite surfaces of the second inner current collector.

The first inner electrode and the outer electrode may be the same, and the second inner electrode may be different from the first inner electrode and the outer electrode.

If the first inner electrode and the outer electrode are positive electrodes, the second inner electrode may be a negative electrode, and if the first inner electrode and the outer electrode are negative electrodes, the second inner electrode may be a positive electrode.

Each of the inner separation layer and the outer separation layer may be an electrolyte layer or a separator.

A polymer layer that is spirally wound so as to have predetermined gaps may be formed on an outer surface of the outer current collector of the outer electrode.

The laminated embedded member may be spirally wound around an outer surface of the outer current collector such that at least a part of the laminated embedded member overlaps the polymer layer.

The polymer layer may be an adhesive layer configured for adhesion between the outer surface of the outer current collector and the laminated embedded member.

The polymer layer may be made of any one selected from the group consisting of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

The laminated embedded member may wrap around two ends of the cable-type cell.

If the cable-type cell is a monocell, the first inner current collector may be formed such that an inner electrode tab protrudes out of the laminated embedded member, and if the cable-type cell is a bi-cell, the second inner current collector may be formed such that an inner electrode tab protrudes out of the laminated embedded member.

The sectional shape of the cable-type cell may be any one of a circular shape, an oval shape, a triangular shape, a quadrangular shape, a square shape, a rectangular shape, a polygonal shape, or an amorphous shape.

A highly flexible and low-resistance cable-type cell without electrode tabs according to the present invention includes a cable-type electrode assembly that includes two or more inner electrodes, and in sequence, an outer separation layer and an outer electrode spirally wound around outer surfaces of the two or more inner electrodes; and a laminated embedded member spirally wound around the cable-type electrode assembly, wherein the laminated embedded member is wound so as to expose the outer electrode.

The two or more inner electrodes may be disposed in parallel in contact with each other, or the two or more inner electrodes may be disposed in a twisted state.

In addition, the present invention may provide various combinations of the above solving means.

### [Advantageous Effects]

As is apparent from the above description, in a highly flexible and low-resistance cable-type cell without electrode tabs according to the present invention, a shortest distance path for electrons to pass from an active material layer of an electrode to an electrode tab is provided, whereby it is possible to achieve low resistance characteristics.

In addition, the resistance of the cell is minimized regardless of the length of the cable-type cell, whereby it is possible to minimize the degradation of electron transfer characteristics even though the length of the cell increases.

In addition, the length of the cable-type cell may be increased without limiting the performance of the cable-type cell in response to various length changes required by the shape of electronic devices, making it possible to customize the cell to fit the shape of various electronic devices.

### [Description of Drawings]

FIG. 1 is a sectional view of a conventional cable-type cell.
FIG. 2 is a perspective view of bidirectional electrode tabs of the conventional cable-type cell.
FIG. 3 is a schematic view of a cable-type cell having an embedded member exposing an outer current collector according to an embodiment of the present invention.
FIG. 4 is a perspective view of the cable-type cell having the embedded member exposing the outer current collector according to the embodiment of the present invention.
FIG. 5 is an A-A sectional view of a cable-type monocell having an embedded member exposing an outer current collector according to an embodiment of the present invention.
FIG. 6 is a perspective view showing the configuration of an inner electrode tab of the cable-type cell having the embedded member exposing the outer current collector according to the embodiment of the present invention.
FIG. 7 is a B-B sectional view of a cable-type bi-cell having an embedded member exposing an outer current collector according to an embodiment of the present invention.
FIG. 8 is a schematic view of a cable-type cell including a plurality of inner electrodes with an embedded member exposing an outer current collector such that an exposed outer electrode serves as an electrode tab according to an embodiment of the present invention.
FIG. 9 is a graph showing the resistance between an outer electrode and an outer electrode tab based on the length in a conventional cable-type cell, a cable-type cell having a metal layer as an embedded member, and a cable-type cell according to an embodiment of the present invention.
FIG. 10 is a graph showing resistance change (R/R₀) over bending cycle of the conventional cable-type cell, the cable-type cell having the metal layer as the embedded member, and the cable-type cell according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

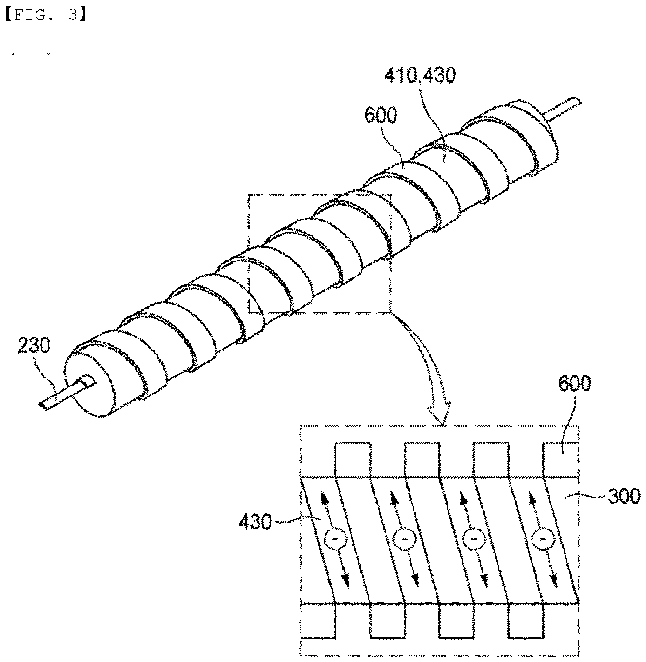

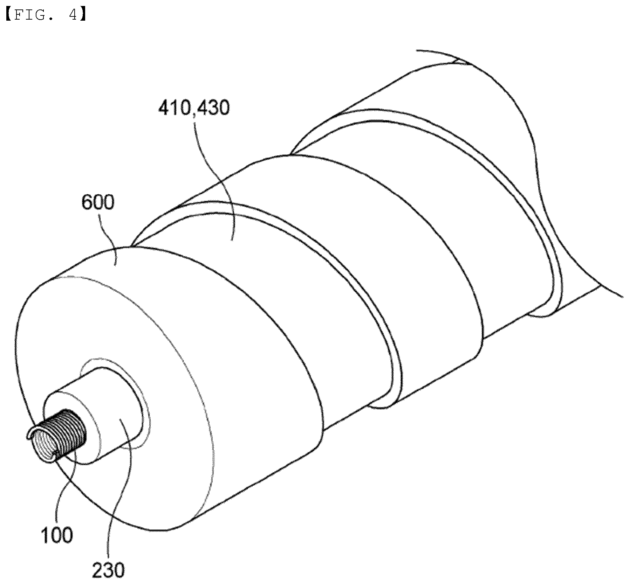

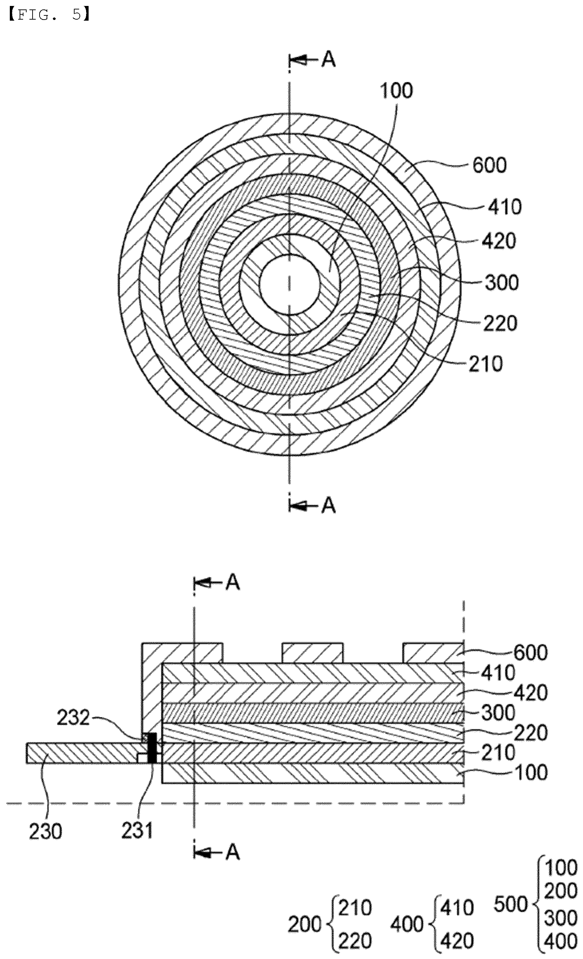

FIG. 3 is a schematic view of a cable-type cell having an embedded member exposing an outer current collector according to an embodiment of the present invention, FIG. 4 is a perspective view of the cable-type cell having the embedded member exposing the outer current collector according to the embodiment of the present invention, and FIG. 5 is an A-A sectional view of a cable-type monocell having an embedded member exposing an outer current collector according to an embodiment of the present invention.

Referring to FIGs. 3 to 5, the cable-type cell may include a cable-type electrode assembly 500 including an inner electrode support 100 and one or more inner electrodes 200, an outer separation layer 300, and an outer electrode 400 spirally wound around the inner electrode support 100 in sequence, and a strip-shaped embedded member 600 spirally wound around the cable-type electrode assembly 500, wherein the embedded member 600 may be formed so as to expose at least a part of the outer electrode.

The term "spirally" refers to a shape that is twisted over a certain range, which is similar to the shape of a common spring, and the term "helically" may be used interchangeably therewith.

Each of the inner electrode 200, the outer separation layer 300, and the outer electrode 400 may have a strip structure extending in one direction.

That is, the embedded member 600 may be added so as to loosely spirally wrap around the outer electrode 400, which is located at the outermost side of the cable-type electrode assembly 500, whereby spiral strip parts of the embedded member 600 may be spaced apart from each other to create gaps and expose the outer electrode 400 through the gaps.

A laminate sheet having a multilayered structure, of which a cell case of a conventional pouch cell is made, may be cut in the form of a strip so as to be used as the laminated embedded member 600, and therefore a separate description of the material and structure of the embedded member will be omitted.

The inner electrode may include a first inner current collector 210, a first inner active material layer 220 formed on the first inner current collector, and an inner electrode tab 230.

The inner electrode tab 230 is formed so as to protrude outward from both ends of the cable-type cell in a longitudinal direction.

The inner electrode may include a first inner electrode including a first inner current collector 210, a first inner active material layer 220, and an inner electrode tab 230, and the first inner electrode, an outer separation layer 300, and an outer electrode 400 may constitute a monocell type cable-type cell.

In the cable-type cell, a partially exposed part of an outer current collector 410 of the outer electrode 400, which is configured in a cylindrical shape, serves as an outer electrode tab 430.

The outer separation layer 300 may be an electrolyte layer or a separator.

The outer electrode 400 may include an outer current collector 410 and an outer active material layer 420 formed on the outer current collector 410.

The outer active material layer 420 may be formed on an inner surface of the outer current collector 410, and the embedded member 600 may be added to an outer surface of the outer current collector 410 in contact therewith.

The embedded member 600 may partially expose the outer electrode 400.

The embedded member 600 may regularly or irregularly expose the outer electrode 400.

An exposed part of the outer electrode 400 may serve as an electrode tab.

The exposed part of the outer electrode 400 may be the outer current collector 410 of the outer electrode 400. That is, the outer current collector 410, which is located on the outermost side of the outer electrode 400, may be exposed to the outside through the gaps formed between parts of the embedded member 600.

The outer active material layer 420 is formed on the inner surface of the outer current collector 410, the outer active material layer 420 abuts the outer separation layer 300 wound inside the outer electrode 400, and the outer surface of the outer current collector 410 is exposed to the outside by the embedded member 500, whereby the exposed part of the outer current collector 410 may serve as the outer electrode tab 430.

Accordingly, in FIG. 4, reference numerals of the outer current collector 410 and the conventional outer electrode tab 430 are written side by side.

Referring to FIG. 5, the cable-type cell according to the present invention is configured such that the inner electrode support 100 is located in the center thereof, the first inner electrode having the first inner active material layer 220 formed on the first inner current collector 210 is spirally wound outside the inner electrode support 100, the outer separation layer 300 is spirally wound outside the first inner electrode, the outer electrode 400 having the outer active material layer 420 formed on the outer current collector 410 is spirally wound outside the outer separation layer 300, and the embedded member 600 is spirally wound around the outer electrode 400 in tight contact therewith such that a part of the outer current collector 410 of the outer electrode 400 is exposed.

When viewing the embedded member 600 from a longitudinal sectional view of the cable-type cell, it can be seen that the embedded member 600 is shaped with an uneven shape of repeated cavities and protrusions.

Looking at the end of the cable-type cell, the embedded member 600 may be formed so as to wrap around the outer current collector 410, the outer active material layer 420, the outer separation layer 300, and the first inner active material layer 220.

The inner electrode tab 230 is connected to the inner current collector 210 by welding, wherein an inner electrode tab weld 231 that connects the end of the inner current collector 210 and the inner electrode tab 230 may be formed.

An inner electrode tab weld sealant layer 232 may be formed to non-conductively seal the inner electrode tab weld.

The end of the inner electrode support 100 may also be wrapped by the embedded member 600.

A sealant layer may be further formed on the end of the inner electrode support 100.

The inner electrode support 100 may have an open structure having a space defined therein.

The inner electrode support 100 may be at least one spirally wound wire, at least one spirally wound sheet, a twisted wire, a linear wire, a hollow fiber, or a meshed support.

The hollow fiber may be made of at least one selected from the group consisting of polyethylene, polypropylene, polytetrafluoroethylene, polyvinylidene fluoride, polyacrylonitrile, polyimide, polyethylene terephthalate, polyamide imide, polyester imide, polyether sulfone, and polysulfone.

The inner electrode support 100 may include two or more wire type inner electrode supports spirally wound so as to intersect each other.

An inner electrode current collector core portion, a lithium ion supply core portion including an electrolyte, or a filling core portion may be formed in the space defined in the inner electrode support 100.

The inner electrode current collector core portion may be made of carbon nanotube, stainless steel, aluminum, nickel, titanium, sintered carbon, or copper; stainless steel surface-treated with carbon, nickel, titanium, or silver; an aluminum-cadmium alloy; a non-conductive polymer surface-treated with a conductive agent; or a conductive polymer.

The lithium ion supply core portion may include a gelled polymer electrolyte and a support.

The electrolyte may be a non-aqueous electrolyte using ethylene carbonate (EC), propylene carbonate (PC), butylene carbonate (BC), vinylene carbonate (VC), diethyl carbonate (DEC), dimethyl carbonate (DMC), ethyl methyl carbonate (EMC), methyl formate (MF), gamma-butyrolactone (γ-BL), sulfolane, methylacetate (MA), or methylpropionate (MP).

The electrolyte may include an electrolyte selected from among solid electrolytes using polyethylene oxide (PEO), polypropylene oxide (PPO), polyethylene imine (PEI), polyethylene sulfide (PES), or polyvinyl acetate (PVAc).

The electrolyte may further include a lithium salt.

The lithium salt may be any one selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, low aliphatic lithium carbonate, and lithium tetraphenylborate or a mixture of two or more thereof.

Polyethylene oxide (PEO), polyvinylidene fluoride (PVdF), polyvinylidene fluoride-co-hexafluoropropylene (PVdF-HFP), polymethylmethacrylate (PMMA), polyacrylonitrile (PAN), or polyvinyl acetate (PVAc) may be used as the gelled polymer electrolyte.

The first inner electrode may include a first inner current collector 210 and a first inner active material layer 220 formed on one surface of the first inner current collector 210, and the outer electrode 400 may include an outer current collector 410 and an outer active material layer 420 formed on one surface of the outer current collector 410.

A polymer film layer formed on at least one of the other surface of the first inner current collector 210 and the other surface of the outer current collector 410 may be further included. As the result of adding the polymer film layer, the thickness of each of the first inner current collector 210 and the outer current collector 410, which are thin, may be increased to support the active material layer. In addition, since the polymer film layer, which is flexible, is added rather than increasing the thickness of each of the first inner current collector 210 and the outer current collector 410, the first inner current collector 210 and the outer current collector 410 may be easily deformed during a spiral winding process.

The polymer film layer may be made of any one selected from the group consisting of polyolefin, polyester, polyimide, and polyamide or a mixture of two or more thereof.

A polymer layer 440 may be further formed on the surface of at least one of the first inner active material layer 220 and the outer active material layer 420.

The polymer layer may be a porous polymer layer having a pore size of 0.01 µm to 10 µm and a porosity of 5% to 95%.

The polymer layer may include a polar linear polymer, an oxide-based linear polymer, or a mixture thereof.

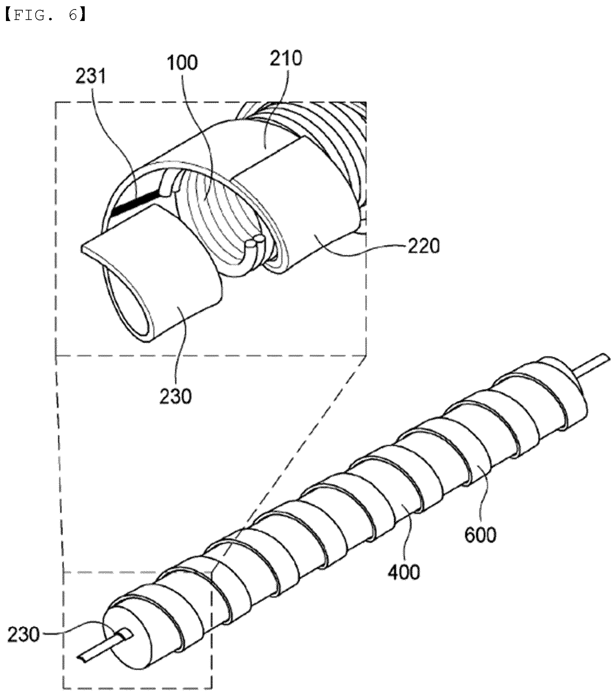

FIG. 6 is a perspective view showing the configuration of the inner electrode tab of the cable-type cell having the embedded member exposing the outer current collector according to the embodiment of the present invention.

Referring to FIG. 6, the embedded member 600 may have a strip structure extending in one direction, and the embedded member 600 may be wound around the outer electrode 400 with a predetermined exposure width.

The exposure width means a spacing of the embedded member strip wound in a spiral shape such that a part of the outer electrode is exposed.

The exposure width is not limited as long as the outer current collector is exposed.

The exposure width may be 50% to 200% of the width of the outer electrode that is wound.

That is, as the result of forming the outer current collector 410 exposed such that the outer electrode serves as an electrode tab, electrode terminal connection is possible at the outer surface of the cable-type cell in the longitudinal direction and at both ends of the cable-type cell.

The inner electrode 200, which is an electrode opposite the outer electrode 400, is connected to the inner electrode tab 230 extending from the inner electrode current collector 210 via the inner electrode tab weld.

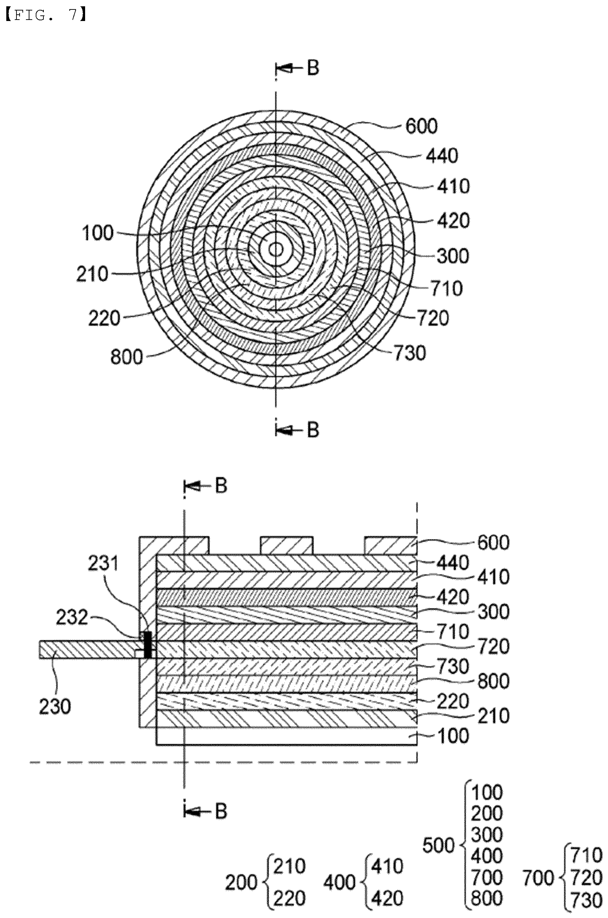

FIG. 7 is a B-B sectional view of a cable-type bi-cell having an embedded member exposing an outer current collector according to an embodiment of the present invention.

Referring to FIG. 7, the cable-type cell according to the present invention is configured such that an inner electrode support 100 is located in the center thereof, a first inner electrode having a first inner active material layer 220 formed on a first inner current collector 210 is spirally wound outside the inner electrode support 100, an inner separation layer 800 is spirally wound outside the first inner electrode, a second inner electrode 700 having a 2-2 inner active material layer 730 and a 2-1 inner active material layer 710 formed respectively on both surfaces of a second inner current collector 720 is spirally wound outside the inner separation layer 800, an outer separation layer 300 is spirally wound outside the second inner electrode 700, an outer electrode 400 having an outer active material layer 420 formed on an outer current collector 410 is spirally wound outside the outer separation layer 300, and an embedded member 600 is spirally wound around the outer electrode 400 in tight contact therewith such that a part of the outer current collector 410 of the outer electrode 400 is exposed.

The cable-type electrode assembly 500 showing in FIG. 7 may be a bi-cell type cable-type cell configured such that the first inner electrode, the inner separation layer 800, the second inner electrode 700, the outer separation layer 300, and the outer electrode 400 are spirally wound around the inner electrode support 100 in sequence. The inner electrode 200 includes an inner separation layer 800 spirally wound outside the first inner electrode and a second inner electrode 700 spirally wound outside the inner separation layer 800.

The first inner electrode is configured identically to the inner electrode 200 shown in FIG. 5. The second inner electrode 700 may include a second inner current collector 720 and a 2-1 inner active material layer 710 and a 2-2 inner active material layer 730 formed respectively on both surfaces of the second inner current collector 720.

The first inner electrode and the outer electrode 400 may be the same electrodes, and the second inner electrode 700 may be a different electrode from the first inner electrode and the outer electrode 400.

If the first inner electrode and the outer electrode 400 are positive electrodes, the second inner electrode 700 may be a negative electrode, and if the first inner electrode and the outer electrode 400 are negative electrodes, the second inner electrode 700 may be a positive electrode.

Each of the inner separation layer 800 and the outer separation layer 300 may be an electrolyte layer or a separator.

A polymer layer 440 spirally wound to create gaps spaced at predetermined intervals may be formed on an outer surface of the outer current collector 410 of the exposed outer electrode 400.

The embedded member 600 may be formed on the outer surface of the outer current collector 410 such that at least a part of the embedded member overlaps the polymer layer 440.

The polymer layer 440 may be an adhesive layer for adhesion between the outer surface of the outer current collector 410 and the embedded member 600.

The polymer layer 440 may be made of any one selected from the group consisting of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

The polymer material of the adhesive layer is not limited as long as the adhesive layer is capable of coupling the sheathing member and the embedded member to each other.

The adhesive layer may be replaced by a pressure-sensitive adhesive.

The embedded member 600 may be formed so as to wrap around both ends of the cable-type cell.

If the cable-type cell is the monocell, the first inner current collector 210 may be formed such that the inner electrode tab 230 protrudes out of the embedded member 600, and if the cable-type cell is the bi-cell, the first inner current collector 210 may be formed such that the inner electrode tab 230 protrudes out of the embedded member 600 and the second inner current collector 720 may be formed such that the inner electrode tab 230 protrudes out of the embedded member 600.

The sectional shape of the cable-type cell may be any one of a circular shape, an oval shape, a triangular shape, a quadrangular shape, a square shape, a rectangular shape, a polygonal shape, and an amorphous shape.

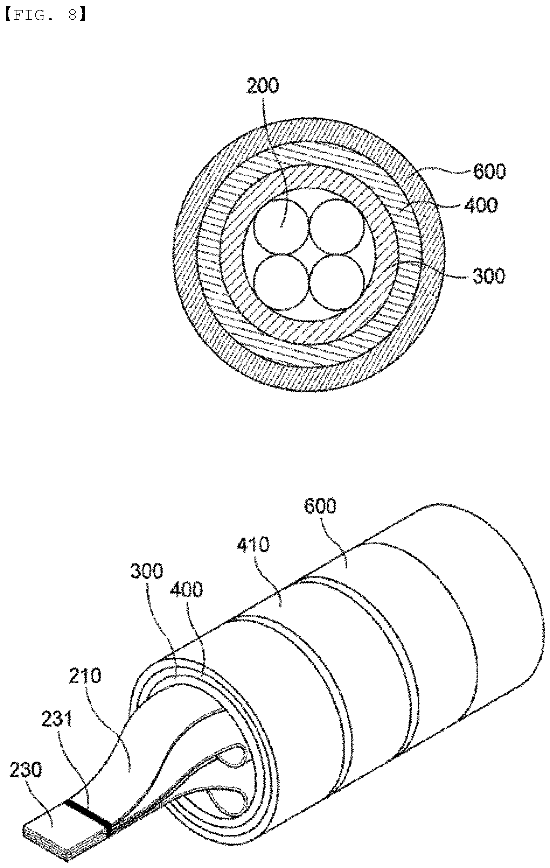

FIG. 8 is a schematic view of a cable-type cell including a plurality of inner electrodes with an embedded member exposing an outer current collector such that an exposed outer electrode serves as an electrode tab according to an embodiment of the present invention.

Referring to FIG. 8, the cable-type cell may include a cable-type electrode assembly including two or more inner electrodes 200 and an outer separation layer 300 and an outer electrode 400 formed so as to surround outer surfaces of the two or more inner electrodes 200 and spirally wound in sequence and a laminated embedded member 600 spirally wound around the cable-type electrode assembly, wherein the embedded member 600 may be formed so as to expose the outer electrode 400.

Two or more inner electrodes 200 may be disposed in parallel in contact with each other, or the two or more inner electrodes 200 may be disposed in a twisted state.

While the twisted state is not particularly restricted, a plurality of strands of electrodes may be twisted in a state of being disposed side by side in parallel, or a plurality of strands of electrodes may be disposed one on top of the other and twisted as if braiding long hair.

If a plurality of inner electrodes 200 is provided, the inner electrodes may be densely packed together, whereby the diameter of the cable-type cell according to the present invention may be decreased. Such a cable-type cell may be made thinner than a conventional cable-type cell, allowing cable-type cells to be connected long in series, or a plurality of cells may be connected horizontally to form a sheet type structure for use in smart fabric or wearable applications.

By having the inner electrodes densely packed with each other as described above, the inner diameter of the cable-type cell according to the present invention may be decreased.

However, if the inner electrodes have hollows, the inner electrodes may be filled with an electrolyte through a needle, but if the inner electrodes are densely packed without hollows as described above, it is not easy to fill the inner electrodes with the electrolyte using a needle as described above. In the present invention, therefore, a method of filling the inner electrodes with the electrolyte when the inner electrodes have no hollows, especially when non-hollow inner electrodes are densely packed with each other, has been studied. To this end, the inventors of the present application have invented a method of allowing the electrode assembly to pass through an electrolyte bath such that an electrolyte is absorbed into the cell, and after impregnation using the electrolyte bath, performing polymer coating to prevent the electrolyte from escaping to the outside to encapsulate the electrode assembly.

A polymer electrolyte layer used for encapsulation has ionic conductivity such that the electrolyte is absorbed like a polymer electrolyte.

The cable-type secondary battery produced by this method is a cable-type secondary battery having non-hollow, densely packed inner electrodes, which facilitates the injection of electrolyte.

### (Comparative Example 1)

A sheet type embedded member having a multilayered structure was attached to wrap around the entire outer surface of a monocell type cable-type cell (pristine cable-type cell), and the resistance between an outer electrode and an outer electrode tab was measured. In the experiment, the outer electrode was configured as a positive electrode. In Comparative Example 1, an electrode tab extending from one of both ends of the cable-type cell serves as the outer electrode tab.

### (Comparative Example 2)

A sheet type embedded member having a single metal layer structure was attached to wrap around the entire outer surface of a monocell type cable-type cell (tabless cable-type cell), and the resistance between an outer electrode and an outer electrode tab was measured. In the experiment, the outer electrode was configured as a positive electrode. In Comparative Example 2, the embedded member serves as the outer electrode tab.

### (Example 1)

A monocell type cable-type cell (tabless cable-type cell 2) was spirally wound such that an embedded member having a multilayered structure of the present invention partially exposes an outer electrode, and the resistance between the outer electrode and an outer electrode tab was measured. In the experiment, the outer electrode was configured as a positive electrode. In the Example 1, the part of the outer electrode exposed to the outside serves as the outer electrode tab.

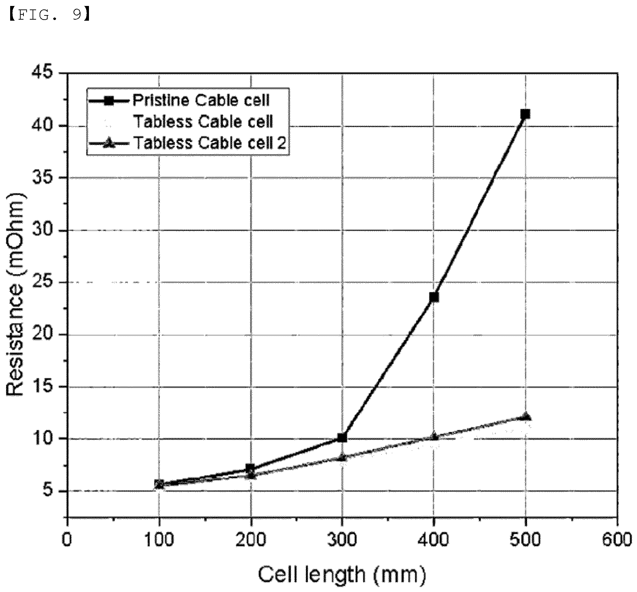

FIG. 9 is a graph showing the resistance between an outer electrode and an outer electrode tab based on the length in a conventional cable-type cell, a cable-type cell having a metal layer as an embedded member, and a cable-type cell according to an embodiment of the present invention.

In the graph of FIG. 9, the conventional cable-type cell is denoted by "pristine cable-type cell," the cable-type cell having the metal layer as the embedded member is denoted by "tabless cable-type cell," and the cable-type cell of the present invention is denoted by "tabless cable-type cell 2."

Referring to FIG. 9, it can be seen that, in the case of the cable-type cell including the embedded member having the multilayered structure of Comparative Example 1 (pristine cable-type cell), the resistance between the positive electrode and the positive electrode tab increases sharply at a length of the cable-type cell of 300 mm as the length of the cable-type cell increases.

It can be seen that, in the case of the cable-type cell including the embedded member having the single metal layer structure of Comparative Example 2 (tabless cable-type cell), the resistance between the positive electrode and the positive electrode tab is measured to be 12.5 mOhm or less, even for a length of the cable-type cell of 500 mm, as the length of the cable-type cell increases.

It can be seen that, in the case of the cable-type cell in which the embedded member having the multilayered structure partially exposes the outer electrode according to the present invention of Example 1 (tabless cable-type cell 2), the resistance between the positive electrode and the positive electrode tab is measured to be 12.5 mOhm or less, even for a length of the cable-type cell of 500 mm, as the length of the cable-type cell increases.

### (Comparative Example 3)

Both ends of the monocell type cable-type cell including the embedded member having the conventional multilayered structure of Comparative Example 1 (pristine cable-type cell) were fixed, and external force was repeatedly applied to the center of the cable-type cell to measure resistance change (R/R₀) of the assembly due to increase in bending cycle.

### (Comparative Example 4)

Both ends of the cable-type cell having only the single metal layer as the embedded member of Comparative Example 2 (tabless cable-type cell 1) were fixed, and external force was repeatedly applied to the center of the cable-type cell to measure resistance change (R/R₀) of the assembly due to increase in bending cycle.

### (Example 2)

Both ends of the cable-type cell in which the embedded member having the multilayered structure partially exposes the outer electrode of the present invention (tabless cable-type cell 2) were fixed, and external force was repeatedly applied to the center of the cable-type cell to measure resistance change (R/R₀) of the assembly due to increase in bending cycle.

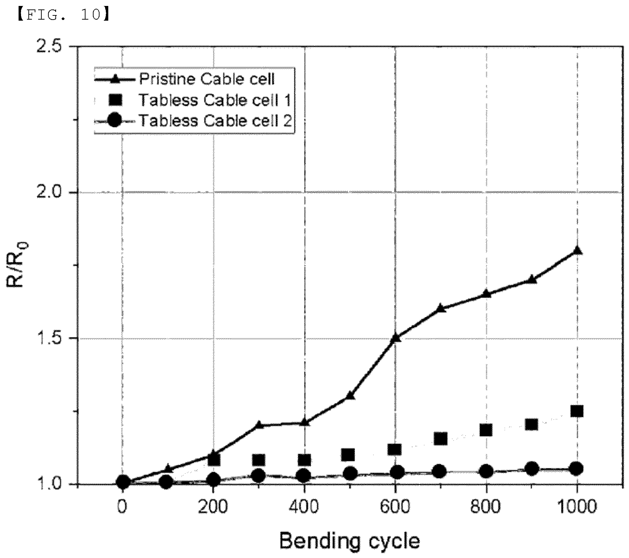

FIG. 10 is a graph showing resistance change (R/R₀) over bending cycle of the conventional cable-type cell, the cable-type cell having only the single metal layer as the embedded member, and the cable-type cell according to the embodiment of the present invention.

In the graph of FIG. 10, the conventional cable-type cell is denoted by "pristine cable-type cell," the cable-type cell having only the single metal layer as the embedded member is denoted by "tabless cable-type cell 1," and the cable-type cell of the present invention is denoted by "tabless cable-type cell 2."

Referring to FIG. 10, it can be seen that, in the case of the conventional cable-type cell including the embedded member having the multilayered structure of Comparative Example 3 (pristine cable-type cell), the resistance change increases linearly as the number of bending cycles increases.

It can be seen that, in the case of the cable-type cell including the embedded member having the single metal layer structure of Comparative Example 4 (tabless cable-type cell 1), the resistance change is slight as the number of bending cycles increases. After 1,000 bending cycles, the resistance change was found to be 1/3 of that of Comparative Example 3.

It can be seen that, in the case of the cable-type cell in which the embedded member having the multilayered structure partially exposes the outer electrode according to the present invention of Example 2 (tabless cable-type cell 2), there is little change in resistance up to 1,000 bending cycles.

Those skilled in the art to which the present invention pertains will appreciate that various applications and modifications are possible within the category of the present invention based on the above description.

### (Description of Reference Numerals)

- 100:: Inner electrode support
- 200:: Inner electrode
- 210:: First inner current collector
- 220:: First inner active material layer
- 230:: Inner electrode tab
- 231:: Inner electrode tab weld
- 232:: Inner electrode tab weld sealant layer
- 300:: Outer separation layer
- 400:: Outer electrode
- 410:: Outer current collector e
- 420:: Outer active material layer
- 430:: Outer electrode tab
- 440:: Polymer layer
- 500:: Cable-type electrode assembly
- 600:: Embedded member
- 610:: First embedded member layer
- 620:: Second embedded member layer
- 630:: Third embedded member layer
- 640:: Fourth embedded member layer
- 700:: Second inner electrode
- 710:: 2-1 inner active material layer
- 720:: 2nd inner current collector
- 730:: 2-2 inner active material layer
- 800:: Inner separation layer

## Claims

1. A cable-type cell comprising:
a cable-type electrode assembly that includes an inner electrode support, and in sequence, one or more inner electrodes, an outer separation layer, and an outer electrode spirally wound around the inner electrode support; and
a laminated embedded member spirally wound around the cable-type electrode assembly, wherein
the laminated embedded member is wound so as to expose the outer electrode.

2. The cable-type cell according to claim 1, wherein the laminated embedded member partially exposes the outer electrode.

3. The cable-type cell according to claim 2, wherein the laminated embedded member regularly or irregularly exposes the outer electrode.

4. The cable-type cell according to claim 1, wherein an exposed part of the outer electrode is configured to be an electrode tab.

5. The cable-type cell according to claim 1, wherein the laminated embedded member has a strip structure extending in one direction and is wound such that the outer electrode is partially exposed.

6. The cable-type cell according to claim 1, wherein:
the one or more inner electrodes include a first inner electrode;
the first inner electrode includes a first inner current collector and a first inner active material layer formed on one surface of the first inner current collector; and
the first inner electrode, the outer separation layer, and the outer electrode constitute a monocell.

7. The cable-type cell according to claim 6, wherein:
the outer electrode includes an outer current collector and an outer active material layer formed on an inner surface of the outer current collector; and
the first inner electrode, the outer separation layer, and the outer electrode constitute a monocell.

8. The cable-type cell according to claim 6, wherein:
the one or more inner electrodes include an inner separation layer spirally wound outside the first inner electrode and a second inner electrode spirally wound outside the inner separation layer; and
the first inner electrode, the inner separation layer, the second inner electrode, the outer separation layer, and the outer electrode constitute a bi-cell.

9. The cable-type cell according to claim 8, wherein the second inner electrode includes:
a second inner current collector and a 2-1 inner active material layer and a 2-2 inner active material layer formed respectively on opposite surfaces of the second inner current collector.

10. The cable-type cell according to claim 8, wherein:
the first inner electrode and the outer electrode are the same; and
the second inner electrode is different from the first inner electrode and the outer electrode.

11. The cable-type cell according to claim 8, wherein:
if the first inner electrode and the outer electrode are positive electrodes, the second inner electrode is a negative electrode; and
if the first inner electrode and the outer electrode are negative electrodes, the second inner electrode is a positive electrode.

12. The cable-type cell according to claim 8, wherein each of the inner separation layer and the outer separation layer is an electrolyte layer or a separator.

13. The cable-type cell according to claim 7, wherein a polymer layer that is spirally wound so as to have predetermined gaps is formed on an outer surface of the outer current collector of the outer electrode.

14. The cable-type cell according to claim 13, wherein the laminated embedded member is spirally wound around an outer surface of the outer current collector such that at least a part of the laminated embedded member overlaps the polymer layer.

15. The cable-type cell according to claim 13, wherein the polymer layer is an adhesive layer configured for adhesion between the outer surface of the outer current collector and the laminated embedded member.

16. The cable-type cell according to claim 13, wherein the polymer layer is made of any one selected from a group consisting of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

17. The cable-type cell according to claim 1, wherein the laminated embedded member wraps around two ends of the cable-type cell.

18. The cable-type cell according to claim 17, wherein:
if the cable-type cell is a monocell, a first inner current collector is formed such that an inner electrode tab protrudes out of the laminated embedded member; and
if the cable-type cell is a bi-cell, a second inner current collector is formed such that an inner electrode tab protrudes out of the laminated embedded member.

19. The cable-type cell according to claim 1, wherein a sectional shape of the cable-type cell is any one of a circular shape, an oval shape, a triangular shape, a quadrangular shape, a square shape, a rectangular shape, a polygonal shape, or an amorphous shape.

20. A cable-type cell comprising:
a cable-type electrode assembly that includes two or more inner electrodes, and in sequence, an outer separation layer and an outer electrode spirally wound around outer surfaces of the two or more inner electrodes; and
a laminated embedded member spirally wound around the cable-type electrode assembly, wherein
the laminated embedded member is wound so as to expose the outer electrode.

21. The cable-type cell according to claim 20, wherein:
the two or more inner electrodes are disposed in parallel in contact with each other; or
the two or more inner electrodes are disposed in a twisted state.
